# DEMANDE DE BREVET EUROPEEN

(11) **EP 2 466 166 A1**
(43) Date de publication de la demande: **20.06.2012**
(21) Numéro de dépôt: 11189557.9
(22) Date de dépôt: 17.11.2011
(51) Int. Cl.: F16D 65/12

(54) **Disque de frein et procédé de fabrication d'un tel disque**

(30) Priorité: 15.12.2010 FR 1004901
(71) Demandeur: Robert Bosch GmbH, 70442 Stuttgart (DE)
(72) Inventeur: Dupuis, Vincent, 70567 Stuttgart Mohringen (DE)
(74) Mandataire: Hurwic, Aleksander Wiktor

(57) **Abrégé**

Disque de frein dont la surface active (14) est munie de motifs en creux (2), le disque ayant un revêtement en métal dur. Les motifs en creux (2) sont des rainures au profil sinusoïdal symétrique par rapport à l'axe (X-X) du disque (1) et que les distances es et ez sont égales et suffisantes pour ne pas fragiliser le bord du disque. L'invention concerne un procédé de fabrication d'un tel disque (1) ainsi que le frein à disque équipé de ce disque.

## Description

### Domaine de l'invention

La présente invention se rapporte un disque de frein comportant une couronne active coopérant avec les patins de frein et munie d'un revêtement en métal dur.

L'invention se rapporte également à son procédé de fabrication ainsi qu'à un frein équipé d'un tel disque.

### Etat de la technique

Il existe de nombreuses propositions pour protéger la surface de friction d'un disque de frein contre l'usure en particulier en appliquant un revêtement en métal dur sur le disque.

Néanmoins, un tel revêtement modifie les caractéristiques tribologiques de la surface du disque et du patin de frein en contact avec celui-ci. En particulier la présence de l'eau sur la surface de friction peut se traduire par une réduction importante du coefficient de friction avec des risques de défaillance au freinage car les effets de la surface de friction mouillée, sont les mêmes phénomènes que ceux que l'on rencontre dans la lubrification hydrodynamique. On a ainsi un effet de lubrification dynamique de l'interface du disque de frein.

### But de l'invention

La présente invention a pour but de développer un disque de frein présentant d'excellentes caractéristiques de résistance à l'usure sans présenter les inconvénients d'une réduction des caractéristiques tribologiques de la surface du disque, en particulier sous l'effet de projections d'eau.

L'invention a également pour but de développer un procédé permettant de réaliser facilement un tel disque et enfin l'invention à pour but de développer frein à disque équipé d'un tel disque.

### Exposé et avantages de l'invention

A cet effet, l'invention a pour objet un disque de frein du type défini ci-dessus, caractérisé en ce que, la surface active du disque comporte des motifs en creux.

Un disque de frein selon l'invention particulièrement résistant à l'usure, assure une évacuation maximale de l'eau en réduisant au minimum le risque de développement d'un film sur la surface du disque.

Les motifs en creux à la surface du disque ne compliquent pas la fabrication du disque et n'affaiblissent pas le revêtement par des effets d'arêtes vives ni de risque de fissures du revêtement sous l'effet des contraintes thermiques à la limite des rainures. Enfin, le motif en creux permet de créer un signe distinctif du disque, apparaissant derrière la roue lorsque celle-ci est ajourée.

Suivant une autre caractéristique avantageuse les motifs en creux sont des motifs appartenant au groupe comprenant :
- les rainures linéaires, les rainures courbes, les trous, les trous borgnes, et les combinaisons de tels motifs en creux.

Les motifs en creux peuvent avoir des formes extrêmement diverses en fonction notamment de l'efficacité que l'on souhaite pour l'évacuation de l'eau arrivant à la surface du disque.

Suivant une caractéristique particulièrement avantageuse la rainure a un profil sinusoïdal symétrique par rapport à l'axe du disque.

Ce motif sinusoïdal à symétrie centrale, c'est-à-dire à répétition du motif, peut être une combinaison formée d'une répétition triple du motif. Le même motif peut lui-même être répété une ou plusieurs fois créant ainsi un ensemble de rainures à profil sinusoïdal disposées sur la surface active du disque, venant en contact avec les patins de frein.

Les motifs en creux sont prévus sur les deux faces du disque. Les motifs en creux prévus sur les deux faces sont avantageusement différents, c'est-à-dire soit positionnés différemment, soit de formes différentes pour ne pas créer de réduction d'épaisseur importante correspondant à la somme de la profondeur des rainure dans chaque face du disque et aussi pour augmenter la fréquence que le contact des patins sur les deux faces peut engendrer.

L'invention a également pour objet un procédé de fabrication d'un disque, caractérisé en ce qu'on met le disque en forme en y réalisant les motifs en creux puis on le soumet à traitement pour appliquer un revêtement de métal dur au moins sur les surfaces actives du disque.

Suivant une caractéristique avantageuse on réalise les motifs en creux lors de la coulée du disque ou on réalise les motifs en creux dans l'ébauche de coulée, par un usinage avec enlèvement de copeaux.

L'invention a pour objet un frein à disque équipé d'un disque tel que défini de manière générale ci-dessus.

### Dessins

La présente invention sera décrite ci-après à l'aide de modes de réalisation de disques de freins représentés schématiquement dans les dessins annexés dans lesquels :
- la figure 1 montre un exemple de réalisation d'un disque selon l'invention,
- la figure 2 est un tableau montrant différentes formes de motifs en creux réalisés dans une face de disque de frein.
- la figure 3 est un schéma du procédé de fabrication d'un disque de frein selon l'invention,

### Description de modes de réalisation de l'invention

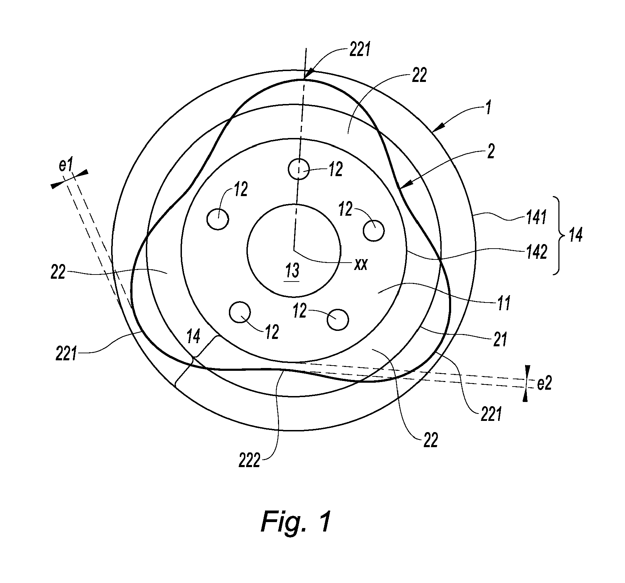

La figure 1 montre un exemple de disque de frein 1 selon l'invention. Ce disque 1 se compose d'une couronne intérieure 11 munie d'orifices 12 de fixation du disque 1 sur le moyeu de roue avec un orifice central 13 pour la mise en place. Au-delà de la couronne intérieure 11, il y a une couronne de friction 14 formant la surface active destinée à coopérer avec les patins de frein non représentés. Le disque 1 comporte les moyens usuels d'évacuation de la chaleur, il a par exemple une structure creuse en épaisseur avec des canaux réalisés en fonderie.

La surface active 14 du disque comporte avantageusement sur ses deux faces, un motif en creux 2 constitué par des rainures linéaires, des rainures courbes, des trous, des trous borgnes ou des combinaisons de tels motifs en creux. Dans l'exemple présenté à la figure 1, la rainure 2 est constituée par une courbe sinusoïdale répétée trois fois (symétrie ternaire) par rapport à un axe X-X du disque 1. Ce motif sinusoïdal évolue autour d'un cercle intermédiaire et ne rejoint ni une arête extérieure 141, ni une arête intérieure 142 de la couronne constituant la surface active 14.

De manière plus précise, la rainure 2 forme trois lobes 22, régulièrement répartis autour de l'axe X-X avec chaque fois un sommet 221 et de chaque côté un pied formant deux à deux un creux 222. Le sommet 221 est écarté de l'arête extérieure 141 de la couronne d'une distance e₁. Il en est de même du creux 22, écarté de l'arête intérieure 142 de la couronne 14 d'une distance e₂.

Les distances e₁, e₂ sont voisines, voire égales. Elles sont suffisantes pour ne pas fragiliser le bord du disque.

La surface du disque comporte un revêtement en métal dur, par exemple une surface nitrurée. Ce revêtement couvre au moins la surface active 14 de chaque face du disque. Les surfaces actives des deux faces du disque comportent des motifs en creux qui sont avantageusement différents les uns des autres. La différence concerne soit le positionnement des motifs, soit la forme des motifs, soit ces deux paramètres.

A titre d'exemple numérique dans le cas de la figure 1, les caractéristiques du disque 1 sont les suivantes :

| | |
|---|---|
| Diamètre extérieur | 295 mm |
| Diamètre intérieur de la couronne active | 182 mm |
| Cercle primitif du motif sinusoïdal diamètre | 238 mm |
| Amplitude du motif sinusoïdal | 41,5 mm |
| Périodicité | 1 |
| Ecart e1 par rapport au bord extérieur | 7,5 mm |
| Ecart e2 par rapport au bord intérieur de la surface active | 7,5 mm |
| Largeur de la rainure | 5 mm |
| Profondeur de la rainure | 1,2 mm |
| Diamètre de l'outil d'usinage | 6,5 mm |

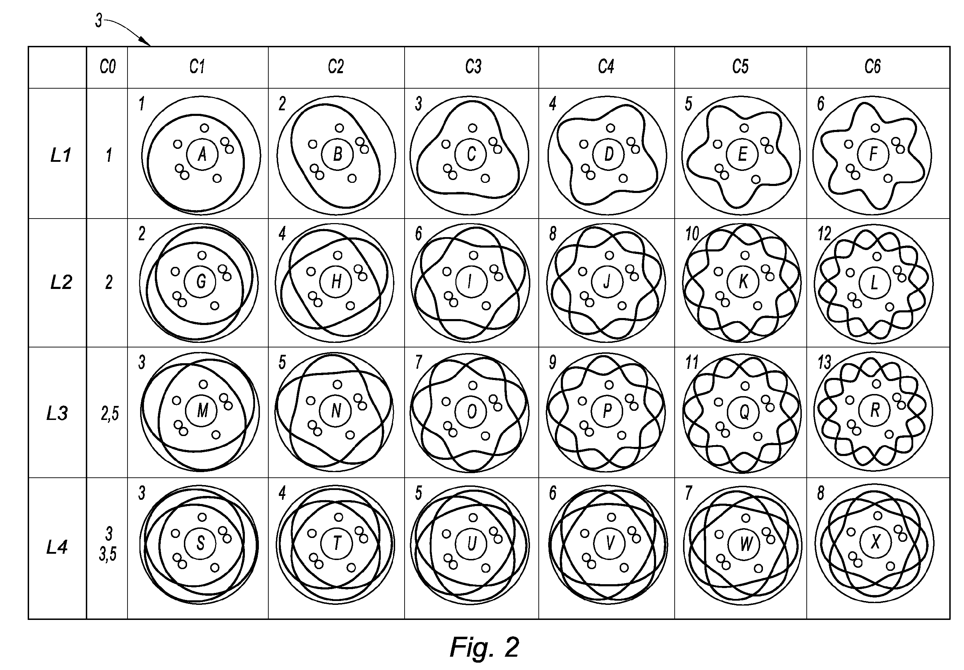

La figure 2 montre sous la forme d'un tableau 3 des disques de freins avec différents motifs en creux formés par des rainures. Les lignes portent les références L₁-L₄ et les colonnes les références C₁-C₆. Les différents disques de freins portent les références A-X.

Les chiffres dans le coin gauche au-dessus de chaque disque indiquent le nombre de lobes de la ou des rainures et le chiffre dans la colonne Co est la périodicité du motif dans chaque ligne.

Pour ne pas compliquer le tableau, les motifs de chaque disque A-X ne sont pas référencés.

Dans la première ligne L₁, on a représenté des motifs simples de rainures constitués par un cercle décentré, une courbe trilobée symétrique, une courbe à quatre lobes symétriques, une courbe à cinq lobes symétriques et une courbe à six lobes symétriques.

Dans la seconde ligne L₂, on a représenté le motif de la première ligne répété (périodicité 2) et décalé angulairement. Dans la troisième ligne L₃, on a présenté le motif de la première ligne avec une répétition égale à 2,5 (périodicité 2,5) et décalé angulairement et dans la quatrième ligne L₄, on a présenté la répétition avec une périodicité de 3 ou 3,5 et décalé angulairement.

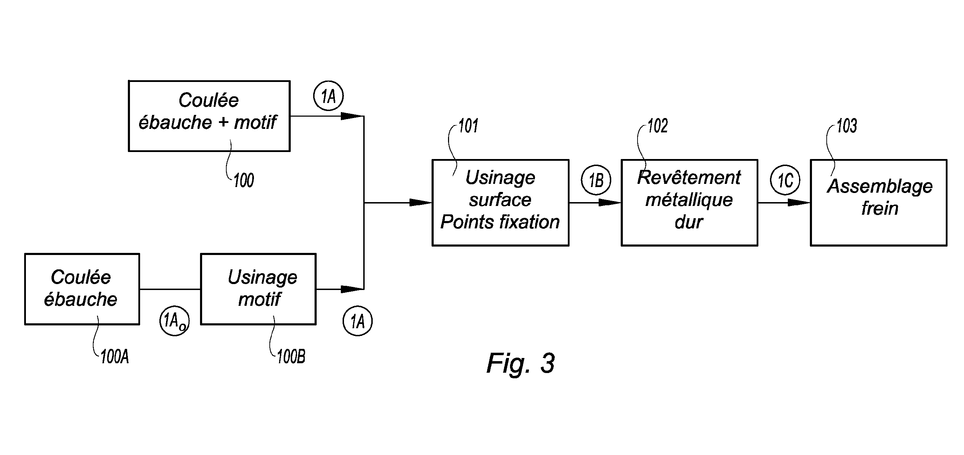

La figure 3 est un schéma par blocs du procédé de fabrication du disque de frein selon l'invention avec sa variante.

Selon le procédé, on réalise l'ébauche du disque de frein 1A par coulée 100. A ce moment, on forme non seulement le disque 1A dans son ensemble, mais on réalise également le motif en creux 2, par exemple le motif à rainures selon les différents exemples donnés précédemment.

Le disque 1A ainsi obtenu par coulée, subit ensuite un usinage (101) de ses surfaces actives de freinage 14 ainsi que la réalisation des perçages ou orifices 12 servant à la fixation du disque au moyeu de roue, ce qui donne l'ébauche 1B.

Après cet usinage, le disque 1B reçoit un revêtement métallique dur et/ou un traitement thermique (102) puis, le disque terminé 1C est assemblé (103) dans le frein à disque.

En variante de ce procédé, on utilise une ébauche 1Ao réalisée par coulée (100A) puis, on usine (100B) les motifs en creux dans l'ébauche 1Ao puis, on réalise l'usinage (101) de la surface et des points de fixation.

Le disque ainsi usiné 1B reçoit ensuite le revêtement métallique dur (102) puis, il est assemblé (103) dans le frein à disque.

L'invention concerne la technique automobile, notamment la réalisation de freins à disque.

### NOMENCLATURE DES ELEMENTS PRINCIPAUX DU DISQUE DE FREIN

- 1: disque
- 2: motif en creux/rainure
- 3: tableau de différents motifs en creux dans un disque de frein
- 11: couronne intérieure
- 12: orifice de fixation
- 13: orifice central
- 14: couronne de friction/surface active
141 arête extérieure de la couronne 14
142 arête intérieure de la couronne 14
- 21: cercle intermédiaire
- 22: lobe
221 sommet du lobe
222 pied du lobe

## Revendications

1. Disque de frein comportant une couronne active susceptible de coopérer avec les patins de frein et munie d'un revêtement en métal dur, la surface active (14) du disque comporte des motifs en creux (2) **caractérisé en ce que** les motifs (2) sont des rainures au profil sinusoïdal symétrique par rapport à l'axe (X-X) du disque (1) et que les distances e₁ et e₂ sont égales et suffisantes pour ne pas fragiliser le bord du disque.

2. Disque de frein selon la revendication 1,
**caractérisé en ce que**
le motif sinusoïdal (2) a une symétrie ternaire et forme trois lobes (22).

3. Disque de frein selon la revendication 1,
**caractérisé en ce que**
le disque (1) comporte des motifs en creux (2) sur les deux faces.

4. Disque de frein selon la revendication 3,
**caractérisé en ce que**
les motifs (2) des deux faces sont différents par leur position et/ou par leur forme.

5. Procédé de fabrication d'un disque de frein selon l'une des revendications 1 à 4,
**caractérisé en ce qu'**
on met le disque (1A) en forme en y réalisant (100, 100A, 100B) les motifs en creux puis on le (1B) soumet à traitement (102) pour appliquer un revêtement de métal dur au moins sur les surfaces actives (14) du disque.

6. Procédé de fabrication d'un disque de frein selon la revendication 5,
**caractérisé en ce qu'**
on réalise (100) les motifs en creux (2) lors de la coulée du disque.

7. Procédé de fabrication d'un disque de frein selon la revendication 5,
**caractérisé en ce qu'**
on réalise (100B) les motifs en creux dans l'ébauche de coulée (1Ao), par un usinage avec enlèvement de copeaux.

8. Frein à disque
**caractérisé en ce qu'**il comporte un disque de frein selon l'une des revendications 1 à 4, dont la surface active (14) est munie d'un revêtement en métal dur et comporte des motifs en creux (2).
